Europäisches Patentamt

European Patent Office

Office européen des brevets

(11) Publication number: **0 074 732**
**B1**

(12) **EUROPEAN PATENT SPECIFICATION**

(45) Date of publication of patent specification: **09.04.86**

(51) Int. Cl.⁴: **E 04 C 2/34,** E 04 C 2/26

(21) Application number: **82304440.9**

(22) Date of filing: **23.08.82**

(54) Improved structural panel.

(30) Priority: **02.09.81 GB 8126550**

(43) Date of publication of application:
**23.03.83 Bulletin 83/12**

(45) Publication of the grant of the patent:
**09.04.86 Bulletin 86/15**

(84) Designated Contracting States:
**AT BE CH DE FR IT LI LU NL SE**

(56) References cited:
**DE-A-1 609 629**
**DE-A-1 609 661**
**FR-A-2 362 980**
**GB-A- 546 397**
**US-A-3 339 326**
**US-A-4 057 936**

(73) Proprietor: **Ramage, L.M. Lee, D.J. Hook, D.M.A. Norman, P.H.N. Richmond, B. Jenkins,E.V. Churchman, A.E. and Miles, K.S. trading as G. Maunsell & Partners Yeomann House 63, Croydon Road**
**Penge London SE20 7TP (GB)**

(72) Inventor: **Head, Peter Richard**
**10 Westfield Road**
**Beckenham Kent (GB)**

(74) Representative: **Hartley, David et al**
**c/o Withers & Rogers 4 Dyer's Buildings Holborn**
**London, EC1N 2JT (GB)**

Courier Press, Leamington Spa, England.

# Description

This invention relates to a structural panel, for use as a unit for example in bridge decking or in the floor of a building, and capable of withstanding compressive loading applied transversely to the panel and also loading applied in the general plane of the panel. The panel comprises spaced sheet members and one or more stiffening members between and rigidly fixed to the spaced sheet members. In its preferred form the structural panel is of sandwich construction with elongate stiffening members between and rigidly fixed to flat parallel sheet members.

The structural panel of the invention may be used for instance in bridge decking, floors of buildings, ships' decks and hulls, and car park floors.

Structural panels are known in which a flat sheet steel member is supported on steel ribs, the ribs being connected to the sheet steel member by long welds. This known construction has two main disadvantages: the high cost of fabrication, and the tendency of the long welds to fail in use, leading to high cost of maintenance. The reason for the former is primarily the great amount of skilled welding work involved in welding the numerous decking panels required in for example a road bridge. The reason for weld failure is primarily due to the high flexural stiffness of a steel rib, compared to the low flexural stiffness of the sheet steel member. The sheet steel member flexes over the top of the stiff steel rib, causing eventual weld fatigue failure at points of weld weakness. In maintenance this involves expensive re-welding work.

The problem thus exists of providing a structural panel which is less expensive to make, by avoiding the need for great lengths of expensive welding, and further which avoids weld failures and thus expensive maintenance work. The invention aims to solve this problem and in addition to provide a structural panel which, for a given loading capability, is lighter in weight than known structures.

U.S. Patent specification 3,339,326 discloses a panel comprising spaced sheet members which may be of steel, and a plurality of elongate three sided elements of triangular cross-section disposed between the sheets, the elements and the sheet members all being banded together by adhesive means and the triangular elements being filled with a low density rigid material, such as cured plastic foam.

According to this invention we propose a structural panel for use as a unit for example in bridge decking or in the floor of a building, and capable of withstanding loading applied transversely to the panel and also loading applied in the general plane of the panel, and the panel comprising spaced sheet members and at least one elongate stiffening member rigidly fixed to and between the spaced sheet members the at least one stiffening member comprising at least one web and a flange joined to each end of the web; and the at least one stiffening member being of plastics material reinforced with fibrous reinforcement material, characterised in that: a) the material of which the at least one elongate stiffening member is made is different from the material of which the spaced sheet members are made; b) the Young's modulus of the at least one elongate stiffening member is not more than 50% of the Young's modulus of the spaced sheet members; c) each flange comprises at least one flange portion disposed at an angle to the web, the at least one flange portion having inner and outer flange surfaces; d) the fibrous reinforcement material is provided within the at least one flange portion and is disposed therein so that the plane in which the fibrous reinforcement material lies is inclined to the plane of the outer flange surface; and e) the outer flange surface is glued, bonded, or otherwise adhered to a respective sheet member. The spaced sheet members are preferably parallel, and they may be flat or curved. The spaced sheet members may be of for example, steel, aluminium or pre-stressed reinforced concrete. The or each elongate stiffening members is made preferably of glass fibre reinforced plastics material, with the fibres arranged crosswise and also diagonally to the length of the stiffening member. The preferred adhesive is an epoxy resin or a toughened acrylic resin. The plastics material used as the adhesive may be different from the plastics material of which the or each stiffening member is moulded. The stiffening members are preferably moulded by what is known as "pultrusion", that is, the plastics material with mineral fibre reinforcement is pulled from a forming die of the appropriate shape to give the required cross-section, for example an I-section, for a stiffening member of that cross-sectional shape.

In one embodiment of the invention a sandwich-type panel has I-section glass reinforced plastics stiffening beams adhered top and bottom to spaced parallel flat steel sheets, with stiffening beams extending both lengthwise and transversely. The transverse stiffening beams need only be shear-connected to the lengthwise stiffening beams. The voids defined by the stiffening beams between the flat steel sheets are preferably filled with foamed plastics material, to give additional stiffness and corrosion resistance to the structural panel.

Because the elongate stiffening members are of considerably lower flexural stiffness than the sheet members, stress concentrations are not set up in the sheet members due to the attachment of the stiffening members. In addition the stress distribution across the adhesive connections between the stiffening members and the sheet members can be designed to be as uniform as possible by the use of tapering flanges on the stiffening members and arranging the fibre reinforcement in a particular manner. The tendency for the adhesive connections to fail is therefore reduced as compared with the long welds in known decking panels, and lightweight epoxy resin surfacings can be used.

Preferably the glass or other mineral reinforced plastics, and any foam filling material used, has good fire resistant properties so that where it is necessary to weld adjacent metal sheet members together, this can be done.

An embodiment of the invention will now be described by way of example, with reference to the accompanying drawings, in which:—

Figure 1 is a diagrammatic part-sectional isometric view showing a portion of sandwich-type structural panel and supporting structure;

Figure 2 is an enlarged diagrammatic section taken on the plane II—II of Figure 1;

Figure 3 is a diagrammatic detail elevation of an elongate stiffening member;

Figure 4 is a detail section showing a joint between two panels; and

Figure 5 is a diagrammatic detail section of a flange of a stiffening member.

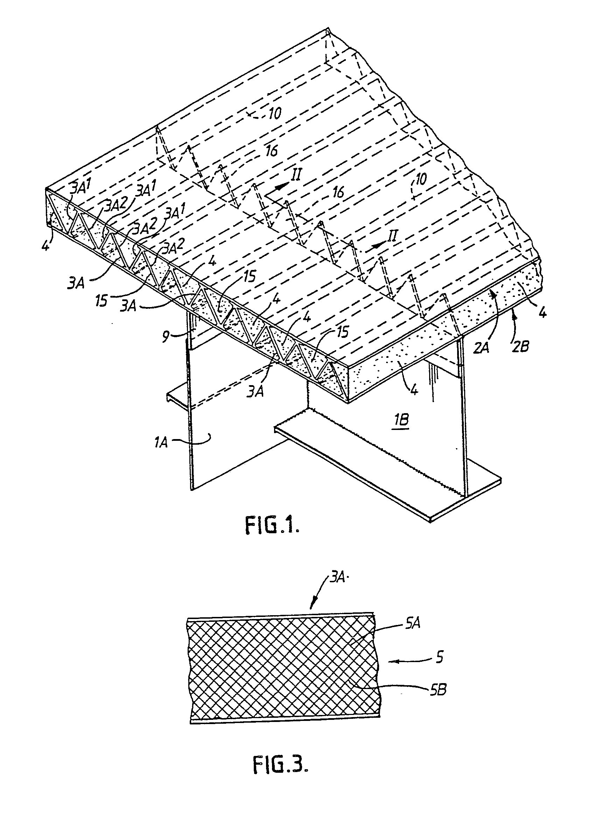

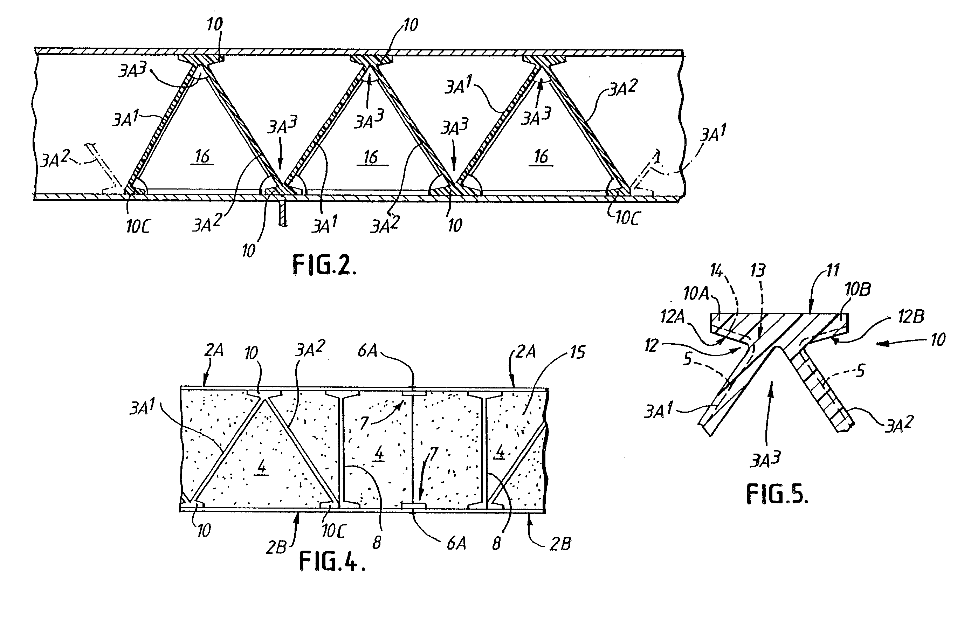

Referring to Figure 1, there is seen part of a sandwich-type structural panel with part of its supporting structure, the latter including a primary web 1A and a cross girder 1B. The panel comprises two flat, spaced, parallel, steel sheet members 2A, 2B which are glued by an epoxy resin or by a toughened acrylic resin to a series of elongate stiffening members 3A extending in the longitudinal direction as shown. In Figure 1 three stiffening members 3A are seen. Each of these three elongate stiffening members 3A is a unitary moulded structure made up (Figures 1 and 2) of, in effect, three pairs of webs $3A^1$, $3A^2$ of glass fibre reinforced plastics material, with adjacent webs $3A^1$, $3A^2$ being disposed at an angle to one another. Thus the stiffening member 3A is of V-corrugated cross-section with webs $3A^1$, $3A^2$ connected at the apices $3A^3$ of the vees. Each stiffening member is moulded as a single unitary structure. At the apices $3A^3$ are flanges 10, seen in Figure 5, which will be described in more detail below.

Although the preferred form of elongate stiffening member 3A is as shown and as described above, other elongate members of moulded, reinforced plastics material could be used, for example the I-section stiffening beams referred to above.

Since the sheet members 2A, 2B are of steel and the elongate stiffening members 3A are of moulded glass fibre reinforced plastics material, it will be understood that they are of different materials and have a different Young's modulus, that of the plastics members 3A being very much less than that of the steel members 2A and 2B.

Other materials can be used, but the material of the sheet members must be different from that of the stiffening members, and the Young's modulus of the stiffening members must be considerably less than that of the sheet members at least 50% less.

Figure 5 is a diagrammatic detail section of a flange 10. The flanges 10 are integral with the webs $3A^1$ and $3A^2$ of the stiffening member at each apex $3A^3$. The flange 10 has two flange portions 10A, 10B extending in opposite directions as shown in Figure 5, although, as seen in Figures 2 and 4, a flange can comprise a single flange portion 10C. These flange portions 10A, 10B and 10C are disposed at an angle to the respective web, as shown. The flange 10 is tapered, seen in Figure 5, and has an outer surface 11 and an inner surface 12. The outer surface 11 is flat and is adhered to the sheet member 2A by adhesive. The inner surface 12 is in two parts 12A, 12B, each lying in a plane which is inclined to the plane of the outer surface 11. The glass fibre reinforcement 5 of each web $3A^1$, $3A^2$ extends up into the respective portion 10A, 10B and is bent round as seen at 13 in Figure 5, so that the portion 14 of the reinforcement is inclined to the plane of the outer surface 11 and lies closer to the surface 12 than to the surface 11. By this means the stress distribution across the adhesive connection between a flange surface 11 and a sheet member 2A, 2B can be made more uniform. The tendency of the adhesive connection to fail is in this way kept low, and a light-weight epoxy resin surface covering (not shown) can be used on the top of the sheet member 2A.

The voids or compartments 15 formed between the sheet members 2A, 2B and the webs $3A^1$, $3A^2$ are filled with fire-resistant expanded foam 4.

Referring to Figures 1 and 2, glass fibre reinforced plastics diaphragms 16, of generally triangular shape, are fitted in the voids 15 over the cross girder 1B.

The preferred arrangement of glass fibre reinforcement 5 is seen in Figure 3, with fibres 5A, 5B laid crosswise in the plastics material and also diagonally to the length of the stiffening member 3A. This arrangement of the fibres gives good shear strength and stiffness with low axial stiffness. In this way shear deflection is kept low, as is the variation in field stress in the sheet members 2A, 2B caused by the stiffening members 3A being adhered to them.

Figure 4 shows a welded connection between adjacent panels, with sheet members 2A, 2A, and 2B, 2B, being butt welded together along seam lines 6A, 6B. The welds are backed by metal strips 7. The edge of each panel is sealed by a web 8 of glass reinforced plastics material. The void between the webs 8 and webs 7 is also filled with plastics foam 4, after the panels have been welded together at 6A, 6B.

In the present embodiment, disclosed by way of example, the top and bottom faces of the panel are 200 mm apart; the upper sheet member 2A is of steel 8 mm thick and the lower sheet member 2B of steel 6 mm thick.

The stiffening members 3A are formed by the pultrusion method referred to above.

One possible method of fabrication of the structure shown in Figure 1 is as follows.

i) Connecting flats 9 of the primary web 1A and cross girder 1B are welded to the underside of the lower sheet member 2B.

ii) The upper sheet member 2A is placed upside down on a flat bed (or on a curved bed if camber is required) and the stiffening members 3A are glued down on to the member 2A, at the appropriate spacings.

iii) Resin adhesive is applied to the free flange surfaces 11 of the stiffening members. The lower sheet member 2B is lifted and placed accurately on the surfaces 11; it is then pushed down firmly by means of rams applied at the locations of the stiffening members, at the same time being heated to cure the resin adhesive. Finally, the plastics foam material 4 is pumped in to fill the voids 15.

The above-described embodiment of structural panel in accordance with the invention is primarily intended for use as a vehicle-supporting surface, for example a bridge deck. But the panel of the invention can have many other applications: one example is the use of a sandwich-type panel to form the bottom flange of a box girder; in this case the plastics stiffening members would be reinforced by a longitudinally arranged fibre reinforcement rather than the diagonally arranged fibre reinforcement described above. Another example is the use of a sandwich-type panel deck in which the two sheet members are aluminium plates: such a deck is very light in weight and can be used for example in a temporary military bridge. A further example is the use of a sandwich-type panel in which the two sheet members are prestressed concrete slabs: such a panel can be for example a floor in a building.

## Claims

1. A structural panel, for use as a unit for example in bridge decking or in the floor of a building, and capable of withstanding loading applied transversely to the panel and also loading applied in the general plane of the panel, and the panel comprising spaced sheet members (2A, 2B) and at least one elongate stiffening member (3A) rigidly fixed to and between the spaced sheet members (2A, 2B), the at least one stiffening member (3A) comprising at least one web (3A$^1$, 3A$^2$) and a flange (10) joined to each end of the web; and the at least one stiffening member being of plastics material reinforced with fibrous reinforcement material (14),

characterized in that:

a) the material of which the at least one elongate stiffening member (3A) is made is different from the material of which the spaced sheet members (2A, 2B) are made;

b) the Young's modulus of the at least one elongate stiffening member (3A) is not more than 50% of the Young's modulus of the spaced sheet members (2A, 2B);

c) each flange (10) comprises at least one flange portion (10A, 10B, 10C) disposed at an angle to the web, the at least one flange portion having inner and outer flange surfaces (12A, 12B, 11);

d) the fibrous reinforcement material (14) is provided within the at least one flange portion (10A, 10B, 10C) and is disposed therein so that the plane in which the fibrous reinforcement material (14) lies is inclined to the plane of the outer flange surface (11); and

e) the outer flange surface (11) is glued, bonded, or otherwise adhered to a respective sheet member (2A, 2B).

2. A panel according to claim 1 characterized in that the at least one flange portion (10A, 10B, 10C) is tapered with the inner flange surface (12A, 12B) lying in a plane inclined to the plane of the outer flange surface (11).

3. A panel according to claim 2 characterized in that the fibrous reinforcement material (14) within the at least one flange portion (10A, 10B, 10C) lies in a plane generally parallel to the inner flange surface (12A, 12B).

4. A panel according to claim 3 characterized in that the fibrous reinforcement material (14) within the at least one flange portion (10A, 10B, 10C) is located closer to the inner flange surface (12A, 12B) than to the outer flange surface (11).

5. A panel according to claim 1 characterized in that the fibrous reinforcement material (14) comprises fibres (5A, 5B) arranged crosswise and also diagonally to the length of the at least one stiffening member (3A).

6. A panel according to claim 1 characterized in that the fibrous reinforcement material (14) extends from the at least one web (3A$^1$, 3A$^2$) and round into the at least one flange portion (10A, 10B).

7. A panel according to claim 1 characterized in that the at least one stiffening member (3A) comprises two or more webs (3A$^1$, 3A$^2$), adjacent webs being disposed at an angle to one another.

8. A panel according to claim 7 characterized in that the at least one stiffening member (3A) is of V-corrugated cross-section with webs connected at the apices of the vees.

9. A panel according to claim 8 characterized in that the at least one stiffening member (3A) is formed with an integral flange (10) at each apex.

10. A panel according to claim 1 characterized in that the spaced sheet members (2A, 2B) are flat and parallel.

11. A panel according to claim 1 characterized in that the material of the spaced sheet members (2A, 2B) is steel, aluminium or prestressed reinforced concrete.

12. A panel according to claim 1 characterized in that voids (15) between the sheet members (2A, 2B) and the or each elongate stiffening member (3A) contain expanded plastics foam material (4).

13. A panel according to claim 1 characterized in that the flanges (10) are adhered to the sheet members (2A, 2B) by an epoxy resin or a toughened acrylic resin.

## Revendications

1. Panneau de construction, destiné à être utilisé comme module, par exemple, d'un plancher ou d'un sol de bâtiment, et susceptible de supporter les charges appliquées transversalement au panneau, ainsi que, les charges appliquées dans le plan général du panneau, ledit panneau comprenant des feuilles (2A, 2B) espacées et au moins un profilé de renforcement (3A) fixé rigidement aux feuilles espacées (2A, 2B) en étant disposées entre elles, l'un au moins des profilés de renforcement (3A) comprenant au moins un voile (3A¹, 3A²) et une semelle (10) reliée à chaque extrémité du voile; l'un au moins desdits profilés de renforcement étant réalisé en matière plastique renforcée de fibres (14); ledit panneaux de construction étant caractérisé en ce que:

— la matière dans laquelle est réalisé l'un au moins desdits profilés de renforcement (3A) est différente de la matière dans laquelle les feuilles espacées (2A, 2B) sont réalisées;

b) le module d'Young de l'un au moins des profilés de renforcement (3A) n'est pas supérieur à 50 % du module d'Young des feuilles espacées (2A, 2B);

c) chaque semelle (10) comprend au moins une partie formant bras (10A, 10B, 10C) disposée à un angle du voile, l'une au moins des parties formant bras ayant des surfaces intérieures et extérieures (12A, 12B, 11) des semelles;

d) la matière fibreuse de renforcement (14) est prévue pour être disposée à l'intérieur de l'une au moins des parties formant bras (10A, 10B, 10C), de façon que le plan dans lequel s'étend la matière fibreuse de renforcement (14) soit incliné par rapport au plan de la surface extérieure (11) et;

e) la surface extérieure (11) est collée, attachée, ou adhère de toute autre façon à une feuille adjacente (2A, 2B).

2. Panneau selon la revendication 1, caractérisé en ce que l'une au moins des parties formant bras (10A, 10B, 10C) s'effile avec la surface intérieure (12A, 12B) qui s'étend dans un plan incliné par rapport au plan de la surface extérieure (11).

3. Panneau selon la revendication 2, caractérisé en ce que la matière de renforcement fibreuse (14) disposée à l'intérieur de l'une au moins des parties formant bras (10A, 10B, 10C) s'étend dans un plan parallèle, de façon générale, à la surface intérieure (12A, 12B).

4. Panneau selon la revendication 3, caractérisé en ce que la matière de renforcement fibreuse (14) disposée à l'intérieur de l'une au moins des parties formant bras (10A, 10B, 10C) est logée plus près de la surface intérieure (12A, 12B) que de la surface extérieure (11).

5. Panneau selon la revendication 1, caractérisé en ce que la matière de renforcement fibreuse (14) comprend des fibres (5A, 5B) disposées en croix, ainsi que diagonalement à la longueur de l'un au moins des profilés de renforcement (3A).

6. Panneau selon la revendication 1, caractérisé en ce que la matière de renforcement fibreuse (14) s'étend de l'un au moins desdits voiles (3A¹, 3A²) et périphériquement à l'intérieur de l'une au moins desdites parties formant bras (10A, 10B).

7. Panneau selon la revendication 1, caractérisé en ce que l'un au moins des éléments de renforcement (3A) comprend au moins deux voiles (3A¹, 3A²), les voiles adjacents formant un angle entre-eux.

8. Panneau selon la revendication 7, caractérisé en ce que l'un au moins des profilés de renforcement (3A) présente une section ondulée ayant sensiblement la forme d'un V, les voiles étant reliés vers les extrémités apicales des V.

9. Panneau selon la revendication 8, caractérisé en ce que l'un au moins desdits profilés de renforcement (3A) est formé avec une semelle intégrale (10) à chacun de ses sommets.

10. Panneau selon la revendication 1, caractérisé en ce que les feuilles espacées (2A, 2B) sont planes et parallèles.

11. Panneau selon la revendication 1, caractérisé en ce que la matière des feuilles espacées (2A, 2B) est de l'acier, de l'aluminium ou du béton armé précontraint.

12. Panneau selon la revendication 1, caractérisé en ce que des espaces intermédiaires (15) ménagés entre les feuilles (2A, 2B) et les, ou chacun des, profilés de renforcement (3A) contiennent une mousse en matière plastique expansible (4).

13. Panneau selon la revendication 1, caractérisé en ce que les semelles (10) adhèrent aux feuilles (2A, 2B) au moyen d'une résine époxy ou d'une résine acrylique à durcisseur.

**Patentansprüche**

1. Bauplatte zur Benutzung als eine Einheit, z.B. in Brückenfahrbahnen oder in Fußböden von Gebäuden, die zum Aufnehmen von Last transversal zur Platte und auch von Last geeignet ist, die in der Hauptebene der Platte ausgeübt wird, wobei die Bauplatte zwei in Abstand voneinander angeordnete Plattenelemente (2A, 2B) und zumindest ein längliches Versteifungselement (3A) aufweist, das an und zwischen den in Abstand angeordneten Plattenelementen (2A, 2B) starr befestigt ist, dieses zumindest eine Versteifungselement (3A) mindestens einen Streifen (3A¹, 3A²) und einen mit jedem Ende des Streifens verbundenden Flansch (10) aufweist und dieses zumindest eine Versteifungselement aus mit Faserstoff-Verstärkungsmaterial (14) verstärktem Kunststoff besteht,
dadurch gekennzeichnet, daß

a) der Werkstoff, aus welchem das zumindest eine längliche Versteifungselement (3A) hergestellt ist, verschieden von demjenigen Werkstoff ist, aus dem die in Abstand angeordneten Plattenelemente (2A, 2B) hergestellt sind;

b) der YOUNGsche Modul des zumindest einen länglichen Versteifungselementes (3A) nicht mehr als 50% des YOUNGschen Modul der in Abstand angeordneten Plattenelement (2A, 2B) beträgt;

c) jeder Flansch (10) zumindest einen Flanschteil (10A, 10B, 10C) aufweist, der in einem Winkel zu dem Streifen angeordnet ist und zumindest einen Flanschteil, der innere und äußere Flanschflächen (12A, 12B, 11) aufweist;

d) das Faserstoff-Verstärkungsmaterial (14) innerhalb mindestens eines Flanschteiles (10A, 10B, 10C) vorgesehen und derart darin angeordnet ist, daß die Ebene, in welchem das Faserstoff-Verstärkungsmaterial (14) liegt, gegenüber der Ebene der äußeren Flanschoberfläche (11) geneigt ist; und

e) die äußere Flanschoberfläche (11) durch Kleben, Binden oder in anderer Weise an dem jeweiligen Plattenelement (2A, 2B) haftfest angebracht ist.

2. Bauplatte nach Anspruch 1, dadurch gekennzeichnet, daß der zumindest eine Flanschteil (10A, 10B, 10C) sich verjüngend ausgebildet mit der inneren Flanschoberfläche (12A, 12B) in einer Ebene liegt, die gegenüber der Ebene der äußeren Flanschoberfläche (11) geneigt ist.

3. Bauplatte nach Anspruch 2, dadurch gekennzeichnet, daß das Faserstoff-Verstärkungsmaterial (14) innerhalb zumindest eines Flanschteiles (10A, 10B, 10C) in einer Ebene im wesentlichen parallel zur inneren Flanschoberfläche (12A, 12B) liegt.

4. Bauplatte nach Anspruch 3, dadurch gekennzeichnet, daß das Faserstoff-Verstärkungsmaterial (14) innerhalb mindestens eines Flanschteiles (10A, 10B, 10C) näher an der inneren Flanschoberfläche (12A, 12B) als an der äußeren Flanschoberfläche (11) angeordnet ist.

5. Bauplatte nach Anspruch 1, dadurch gekennzeichnet, daß das Faserstoff-Verstärkungsmaterial (14) Fasern (5A, 5B) aufweist, die kreuzweise und auch diagonal zur Längsrichtung des zumindest einen Versteifungselementes (3A) angeordnet sind.

6. Bauplatte nach Anspruch 1, dadurch gekennzeichnet, daß das Faserstoff-Verstärkungsmaterial (14) sich von dem mindestens einen Streifen ($3A^1$, $3A^2$) und rund in den zumindest einen Flanschteil (10A, 10B) erstreckt.

7. Bauplatte nach Anspruch 1, dadurch gekennzeichnet, daß das zumindest eine Versteifungselement (3A) zwei oder mehr Streifen ($3A^1$, $3A^2$) aufweist, wobei benachbarte Streifen in einem Winkel zueinander stehen.

8. Bauplatte nach Anspruch 7, dadurch gekennzeichnet, daß das zumindest ein Versteifungselement (3A) einen V-förmig gewellten Querschnitt aufweist, wobei die Streifen an den V-Spitzen verbunden sind.

9. Bauplatte nach Anspruch 8, dadurch gekennzeichnet, daß das zumindest eine Versteifungselement (3A) an jeder V-Spitze einen einstückig angeformten Flansch (10) aufweist.

10. Bauplatte nach Anspruch 1, dadurch gekennzeichnet, daß die in Abstand voneinander angeordneten dünnen Plattenelemente (2A, 2B) flach und parallel sind.

11. Bauplatte nach Anspruch 1, dadurch gekennzeichnet, daß der Werkstoff, der in Abstand angeordneten Plattenelemente (2A, 2B) Stahl, Aluminium oder vorgespannter Stahlbeton ist.

12. Bauplatte nach Anspruch 1, dadurch gekennzeichnet, daß die Hohlräume (15) zwischen den dünnen Plattenelementen (2A, 2B) und dem oder jedem länglichen Versteifungselement (3A) expandierten Kunststoffschaum (4) enthalten.

13. Bauplatte nach Anspruch 1, dadurch gekennzeichnet, daß die Flansche (10) mittels eines Epoxidharzes oder eines gehärteten Acrylharzes an den Plattenelementen (2A, 2B) angebracht sind.

FIG.1.

FIG.3.

1

FIG.2.

FIG.4.

FIG.5.

0 074 732